(19) Europäisches Patentamt
European Patent Office
Office européen des brevets

(11) **EP 3 115 943 A1**

(12) **EUROPEAN PATENT APPLICATION**

(43) Date of publication:
**11.01.2017 Bulletin 2017/02**

(51) Int Cl.:
***G06Q 10/06*** *(2012.01)*

(21) Application number: **16164882.9**

(22) Date of filing: **12.04.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **07.07.2015 US 201514793620**

(71) Applicant: **FUJITSU LIMITED
Kawasaki-shi,
Kanagawa 211-8588 (JP)**

(72) Inventors:
• **BARIJOUGH, Sanam Mirzazad
  Sunnyvale, CA California 94085 (US)**
• **CHANDER, Ajay
  Sunnyvale, CA California 94085 (US)**

(74) Representative: **Schultes, Stephan
Haseltine Lake LLP
300 High Holborn
London WC1V 7JH (GB)**

(54) **DIRECTIVE DETERMINATION FOR BEHAVIOR ENCOURAGEMENT**

(57) A method may include determining a priority score for a directive based on a priority ranking of the directive. The directive may be associated with a goal of a user. The method may also include determining an opportunity score for the directive based on opportunity data related to opportunity of performance of the directive by the user. Additionally, the method may further include determining a total score for the directive based on the priority score and the opportunity score. Moreover, the method may also include presenting the directive to the user based on the total score. Further, the method may include crowdsourcing a plurality of goals entered by a plurality of other users and generating the goal based on crowdsourced input. The method may also include crowdsourcing a plurality of directives entered by a plurality of other users and generating the directive based on crowdsourced input.

*Fig. 2*

EP 3 115 943 A1

**Description**

FIELD

The embodiments discussed in the present disclosure are related to directive determination for behavior encouragement.

BACKGROUND

Unless otherwise indicated, the materials described in the background section are not prior art to the claims in the present application and are not admitted to be prior art by inclusion in this section. Technology may be designed to encourage attitudes or behaviors of users through, for example, persuasion or social influence. While technology may be designed to help users create good habits, behavior change is difficult and many attempts fail.

The subject matter claimed in the present disclosure is not limited to embodiments that solve any disadvantages or that operate only in environments such as those described above. Rather, this background is only provided to illustrate one example technology area where some embodiments described may be practiced.

SUMMARY

According to an aspect of an embodiment, a method may include determining a priority score for a directive based on a priority ranking of the directive. The directive may be associated with a goal of a user. The method may also include determining an opportunity score for the directive based on opportunity data related to opportunity of performance of the directive by the user. Additionally, the method may further include determining a total score for the directive based on the priority score and the opportunity score. Moreover, the method may also include presenting the directive to the user based on the total score. Further, the method may include crowdsourcing a plurality of goals entered by a plurality of other users and generating the goal based on crowdsourced input. The method may also include crowdsourcing a plurality of directives entered by a plurality of other users and generating the directive based on crowdsourced input.

The object and advantages of the implementations will be realized and achieved at least by the elements, features, and combinations particularly pointed out in the claims.

It is to be understood that both the foregoing general description and the following detailed description are given as examples and explanatory and are not restrictive of the invention, as claimed.

BRIEF DESCRIPTION OF THE DRAWINGS

Example embodiments will be described and explained with additional specificity and detail through the use of the accompanying drawings in which:

Fig. 1A is a diagram representing an example system configured to generate a library of directives associated with a goal;
Fig. 1B is a diagram representing another example system configured to generate one or more suggested directives associated with the goal;
Fig. 1C is a diagram representing another example system configured to generate a set of directives to present to a user;
Fig. 1D is a diagram representing another example system configured to determine a directive to present to the user;
Fig. 2 is a block diagram illustrating an example information processing system that may include a behavior encouragement module;
Fig. 3 is a diagram representing an example environment related to determining a directive for behavior encouragement;
Fig. 4 is a flowchart of an example method of determining a directive for behavior encouragement; and
Figs. 5A-5C is a flowchart of another example method of determining a directive for behavior encouragement.

DESCRIPTION OF EMBODIMENTS

Without motivation or opportunity, behavior change by persons may be difficult. On the other hand, a particular behavior may occur when motivation, opportunity, and triggers converge. Behavior change may also be facilitated by completion of smaller steps (e.g., one or more particular behaviors) that lead to accomplishment of an ultimate goal (e.g., a behavior change). Accordingly, in one or more embodiments described in the present disclosure, a directive may act as a trigger to encourage or prompt a user to complete a step that may lead to accomplishment of a goal. When the directive is determined and presented to the user based on the user's priority for performing the directive, as well as the user's opportunity or ability to perform the directive, the user may be more likely to perform the directive. Accordingly, one or more embodiments described in the present disclosure may be used to determine a directive to present to the user based on the user's priority and opportunity for performing the directive compared to other directives. Further, in one or more embodiments described in the present disclosure, the directive may be determined and presented to the user based on a context surrounding the user, including, for example, a location, a time of day, an emotional state, or an immediately preceding action.

An example embodiment includes a method of determining a directive to present to the user. In some embodiments, the method may include acquiring the directive by acquiring one or more directives that corresponds to a goal of the user. The method may include determining a priority score for the directive based on a priority ranking of the directive. The method may also include receiving opportunity data related to the directive, which may include receiving opportunity data from one or more of the following: a sensor associated with the directive and a questionnaire associated with the directive. Data received from one or more sensors and/or one or more questionnaires and related to a particular directive may be referred to in the present disclosure as "opportunity data" and may indicate an opportunity of performance of the particular directive by the user. The term "opportunity data" may also include data that may indicate a likelihood of performance or an unlikelihood of performance of the particular directive by the user. The method may further include determining an opportunity score for the directive based on the opportunity data. The method may also include determining a total score for the directive based on the priority score and the opportunity score. The method may also include determining that the user is more likely to perform the directive as opposed to one or more other directives based on the total score. The method may further include presenting the directive to the user in response to determining that the user is more likely to perform the directive as opposed to the other directives.

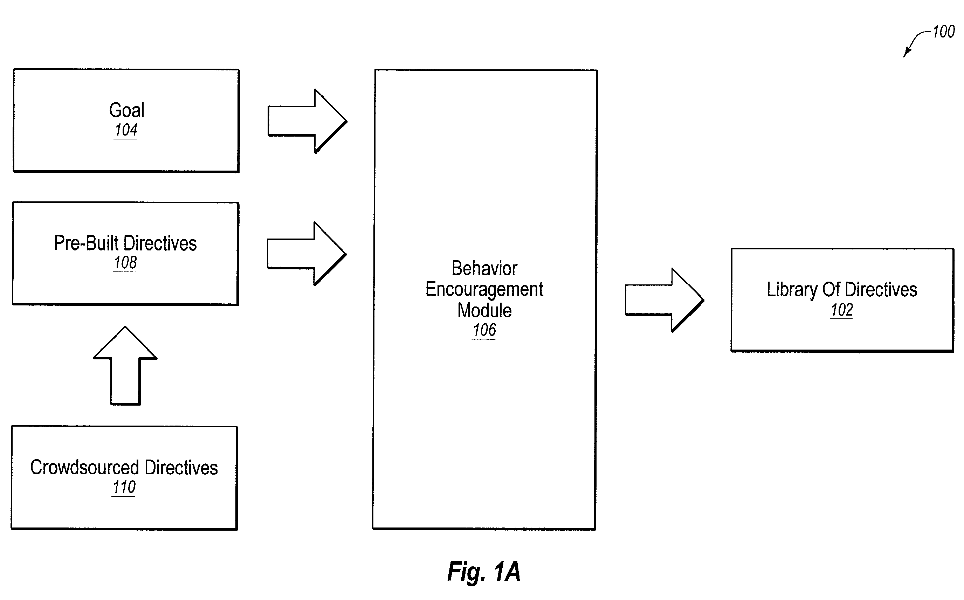

Fig. 1A is a diagram representing an example system 100 configured to generate a library of directives 102 associated with a goal 104, arranged in accordance with at least one embodiment described in the present disclosure. In some embodiments, the system 100 may include a behavior encouragement module ("BEM") 106 configured to generate the library of directives 102. In some embodiments, the goal 104 may be manually input by a user. Alternatively, in some embodiments, the BEM 106 may be configured to present one or more possible goals to the user, and the user may select the goal 104 from the possible goals. In some embodiments, the possible goals presented to the user by the BEM 106 may include one or more crowdsourced goals, which may be input by other users and selected by the BEM 106 based on crowdsourced input, as will later be explained in more detail.

In some embodiments, the BEM 106 may be configured to receive the goal 104 and determine if one or more pre-built directives 108 are associated with the goal 104. In some embodiments, the pre-built directives 108 may include one or more crowdsourced directives 110, which may be manually input by other users and selected by the BEM 106 based on crowdsourced input, as will also later be explained in more detail. In some embodiments, the pre-built directives may be derived from various online resources, such as blogs, advice columns, etc.

In some embodiments, the BEM 106 may be configured to include one or more of the pre-built directives 108 associated with the goal 104 in the library of directives 102. For example, the BEM 106 may be configured to include all of the pre-built directives 108 that are associated with the goal 104 in the library of directives 102. In some embodiments, the BEM 106 may be configured to present the library of directives 102 to the user. In some embodiments, the BEM 106 may be configured to present the library of directives 102 to the user via a user device, such as, for example, a smart phone.

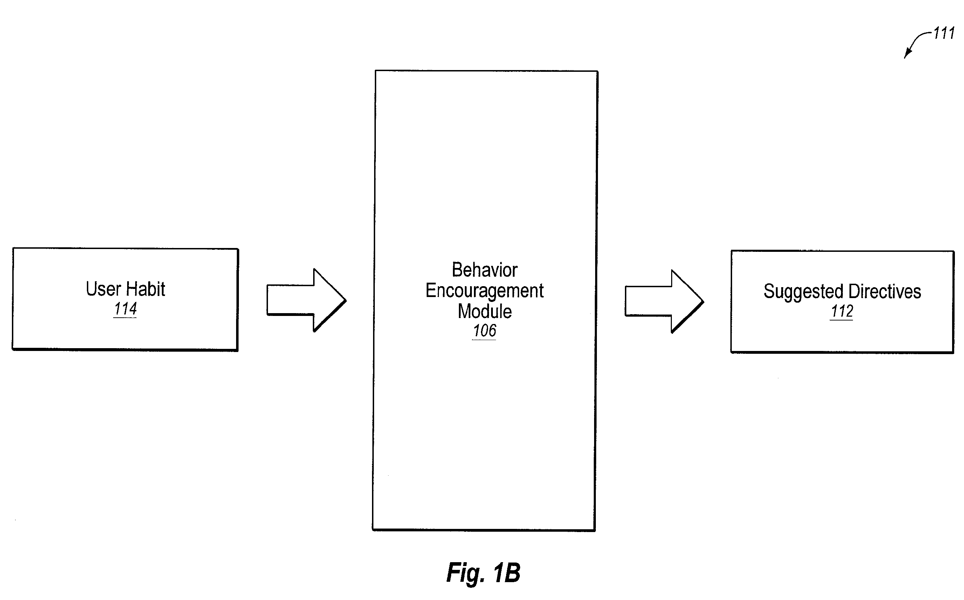

Fig. 1B is a diagram representing another example system 111 configured to generate one or more suggested directives 112 associated with the goal 104, arranged in accordance with at least one embodiment described herein. As illustrated in Fig.1B, in some embodiments, the BEM 106 may be configured to generate the suggested directives 112 associated with the goal 104 based on a user habit 114. In some embodiments, the BEM 106 may be configured to collect and/or analyze opportunity data obtained from one or more sensors or more or more questionnaires to determine the user habit 114. In some embodiments, the opportunity data may be collected by the BEM 106 over time. In some embodiments, the opportunity data may, for example, include historical data or data obtained in the past from the sensors or the questionnaires. For example, the goal 104 may relate to walking a certain number of steps per day, and the BEM 106 may receive particular opportunity data indicating that the user has a habit of walking the user's dog at a certain time in the morning. Based on the user habit, the BEM 106 may be configured to generate a suggested directive 112 related to walking the dog in the morning in order to help the user accomplish the goal 104 of walking the certain number of steps per day.

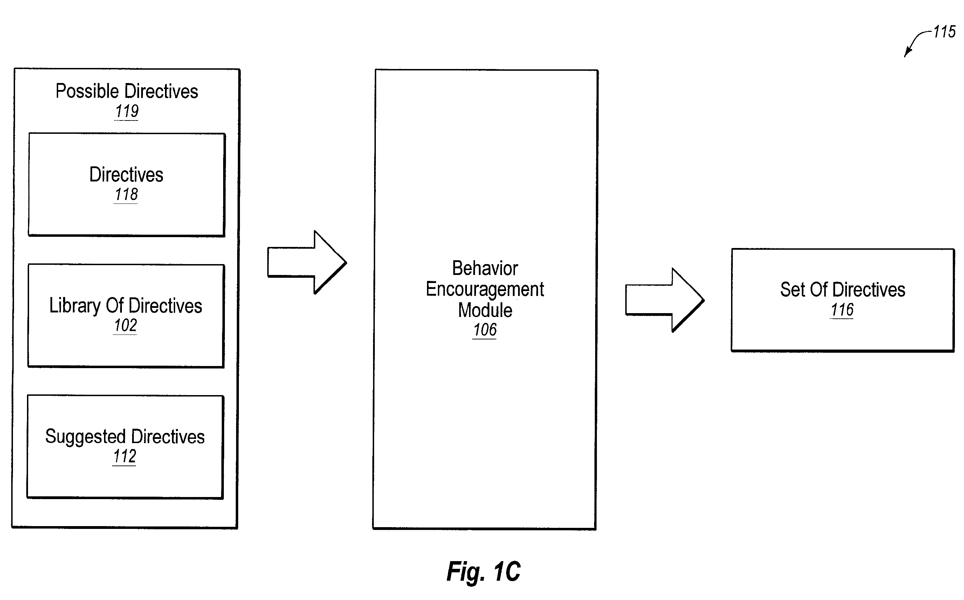

Fig. 1C is a diagram representing the example system 115 configured to generate a set of directives 116, arranged in accordance with at least one embodiment described in the present disclosure. In some embodiments, the BEM 106 may be configured to receive one or more directives 118 input by the user, which may be associated with the goal 104. In some embodiments, one or more of the directives received by the BEM 106 may be manually input by the user. In some embodiments, the suggested directives 112 may be included in the library of directives 102.

In some embodiments, the BEM 106 may be configured to generate the set of directives 116 based on a selection made by the user. For example, in some embodiments, the BEM 106 may be configured to present to the user one or more possible directives 119. The possible directives 119 may include one or more of the following: the directives 118 input by the user, the library of directives 102, and the suggested directives 112. The user may select the set of directives 116 from the possible directives 119. For example, the goal 104 may include "walk for ten (10) minutes per day." The possible directives 119 may be presented to the user, and the user may select the following directives as the set of directives 116: "walk to work," "walk in a mall," "walk to a restaurant for lunch," and "walk and talk with friends." In some embodiments, the user may include a priority for performance when selecting the set of directives 116.

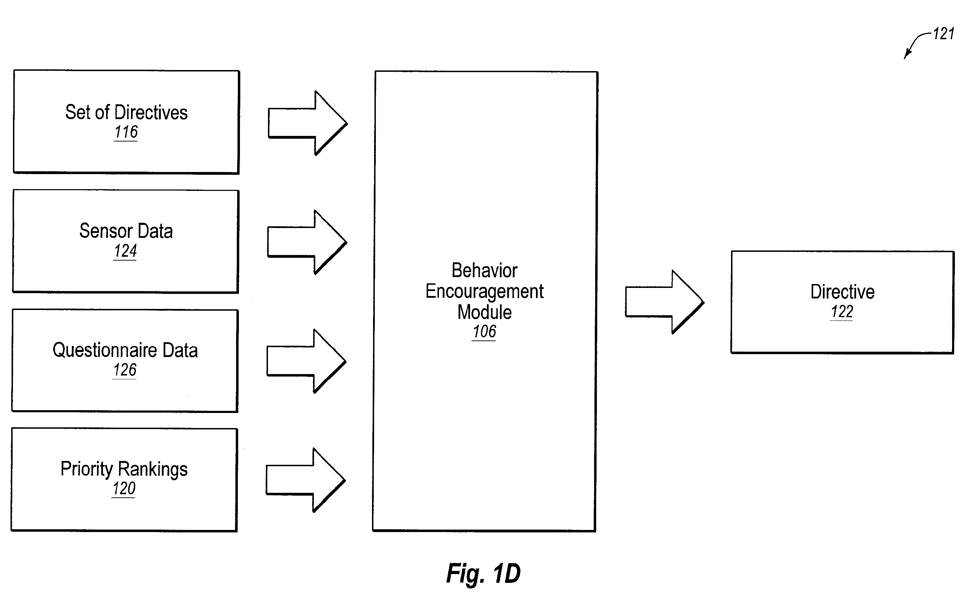

In some embodiments, the user may select the set of directives 116 based on the user's priority for performance, and the BEM 106 may generate the set of directives 116. In some embodiments, the user may rank directives in the set of directives 116 with respect to one another to generate one or more priority rankings 120 (illustrated in Fig. 1D but not Fig. 1C), and the BEM 106 may be configured to receive the priority rankings 120. In some embodiments, the user may give one or more of the directives the same ranking. In some embodiments, the priority rankings 120 may indicate the user's priority for performing one of the possible directives 119 with respect to another of the possible directives 119.

For example, the user may rank a particular directive, "walk to a restaurant for lunch," of the set of directives 116 as a high priority and a particular directive, "walk to work," of the set of directives 116 as a low priority, and the priority rankings 120 may be received by the BEM 106. In some embodiments, the priority rankings 120 received by the BEM 106 may include a number. In some embodiments, the BEM 106 may assign the priority ranking 120 a number. For example, based on the user's priority for performance, the particular directive "walk to a restaurant for lunch" may receive a high priority ranking, and the BEM 106 may assign the high priority ranking any number, such as, for example, the number one (1). Based on the user's priority for performance, the particular directive "walk to work" may receive a low priority ranking, and the BEM 106 may assign the low priority ranking any number, such as, for example, the number two (2). In some embodiments, one or more particular directives of the set of directives 116 may have the same priority ranking.

Fig. 1D is a diagram representing the system 121 configured to determine a directive 122 to present to the user, arranged in accordance with at least one embodiment described herein. In some embodiments, the BEM 106 may determine the directive 122 to present to the user based on one or more of the following: the set of directives 112, opportunity data, e.g., sensor data 124 related to the set of directives and/or questionnaire data 126 related to the set of directives, and the priority rankings 120.

For simplicity in the discussion that follows, the set of directives 116 is assumed to have two directives. However, the set of directives 116 may include any number of directives, and the BEM 106 may determine priority, opportunity, and total scores for each of the directives of the set of directives 116, similar to the operations described below. In some embodiments, the BEM 106 may also determine the user is more likely to perform a particular directive of the set of directives 116 as opposed to other directives of the set of directives 116 and may present the particular directive to the user, similar to the operations described below.

In some embodiments, the BEM 106 may be configured to determine a first priority score, $m_{p1}$, for a first directive of the set of directives 116 based on a first priority ranking 120 of the first directive. In some embodiments, the BEM 106 may be configured to determine a second priority score, $m_{p2}$, for a second directive in the set of directives 116 based on a second priority ranking 120 of the second directive.

In some embodiments, the BEM 106 may also be configured to receive first and second opportunity data related to the first directive and the second directive, respectively. For example, the BEM 106 may be configured to receive first opportunity data related to the first directive from one or more of the following: one or more sensors associated with the first directive and one or more questionnaires associated with the first directive. Similarly, the BEM 106 may be configured to receive second opportunity data related to the second directive from one or more of the following: one or more sensors associated with the second directive and one or more questionnaires associated with the second directive. In the present disclosure, the term "sensor" may refer to a physical sensor that may sense or detect one or more indicators or parameters. In the present disclosure, the term "sensor" may also refer to a system, apparatus, device, or module that may acquire information. In some embodiments, the sensors that may be associated with the first directive and the sensors that may be associated with the second directive may include one or more of the following: a weather sensor, a location sensor, a schedule sensor, a heart rate sensor, a motion sensor, and a sleep sensor.

In some embodiments, the location sensor may be configured to detect or determine a location of the user. For example, the location sensor may include a GPS receiver, a Wi-Fi signal detector, a GSM signal detector, a Bluetooth beacon detector, an Internet Protocol (IP) address detector or any other system, apparatus, device, or module that may detect or determine an opportunity of location.

In these or other embodiments, the weather sensor may be configured to acquire or measure weather information for the user's location based on the determined location. For example, the weather sensor may be configured to retrieve a weather report from the Internet for the determined location. In these or other embodiments, the weather sensor may include one or more sensors that may detect weather conditions in its surrounding environment. For example, in some embodiments, the weather sensor may include one or more of the following: a temperature sensor, a barometric sensor, a humidity sensor, etc.

In some embodiments, the schedule sensor may include one or more systems, apparatuses, devices, or modules configured to extract schedule data from one or more calendars associated with the user. For example, the schedule sensor may be configured to extract schedule data from the user's Outlook Calendar, Google Calendar, or other electronic calendar. The schedule data may be included in opportunity data in some embodiments.

In some embodiments, the heart rate sensor may be configured to measure or determine heart rate or indicators of heart rate. For example, the heart rate sensor may include one or more sensors configured to detect a pulse, a skin temperature, etc. In these or other embodiments, the heart rate sensor may include one or more systems, apparatuses, devices, or modules configured to determine the heart rate based on the detected indicators.

In some embodiments, the motion sensor may be configured to determine or detect motion. For example, in some embodiments, the motion sensor may include any suitable system, apparatus, device, or routine capable of detecting or determining one or more of the following: tilt, shake, rotation, swing, and any other motion. In these or other embodiments, the motion sensor may include one or more of the following sensors: a gyroscope, an accelerometer, a magnetometer, a pedometer, a GPS receiver, and any other sensor that may detect motion. Additionally or alternatively, the motion sensor may include one or more systems, apparatuses, devices, or modules configured to determine motion based on the information that may be detected by the sensors.

In some embodiments, the sleep sensor may be configured to determine whether the user is sleeping and/or to detect indications that the user is sleeping. In some embodiments, the sleep sensor may include a physical sensor capable of detecting indications of whether the user is sleeping, how much the user has slept, the user's sleep patterns, how well the user has slept or a quality of the user's sleep, etc. In some embodiments, the sensors may be included in or connected to a user device. In some embodiments, the sensors may be wirelessly connected to the user device. In these or other embodiments, the sleep sensor may include one or more systems, apparatuses, devices, or modules configured to determine that the user is sleeping based on the indicators.

In some embodiments, the questionnaires may gather opportunity data from the user and may be associated with the first and/or second directive. For example, the questionnaires may relate to one or more of the following types of opportunity data: emotion data, social data, and meal data. In some embodiments, the questionnaires may include questions such as, for example, "Is Sasha, your friend, available today?" to determine social data. In some embodiments, the questionnaires may include questions such as, for example, "What did you have for breakfast today?" to determine meal data. In some embodiments, the questionnaires may include questions such as, for example, "Are you feeling energetic after your meeting?" to determine emotion data. A questionnaire that relates to social data may be referred to herein as a "social questionnaire," a questionnaire that relates to emotion data may be referred to herein as an "emotion questionnaire," and a questionnaire that relates to meal data may be referred to as a "meal questionnaire." In some embodiments, the BEM 106 may be configured to present the questionnaires to the user using a user device, such as, for example, a smart phone.

In some embodiments, the BEM 106 may be configured to determine whether one or more sensors and/or one or more questionnaires are associated with the first directive. Additionally or alternatively, the BEM 106 may be configured to determine whether one or more sensors and/or one or more questionnaires are associated with the second directive. A particular sensor associated with a particular directive may generate opportunity data relevant to performance of the particular directive. In these or other embodiments, a particular questionnaire associated with the particular directive may generate opportunity data relevant to performance of the particular directive based on the user's response to the questionnaire.

For example, the goal 104 may include "walk for ten (10) minutes per day," and the set of directives 116 selected by the user and generated by the BEM 106 may include a first directive "walk to a restaurant for lunch" and a second directive "take building stairs instead of elevator." In some embodiments, the BEM 106 may determine that the first directive "walk to a restaurant for lunch" is associated with, for example, a schedule sensor, an emotion questionnaire, a weather sensor, and a social questionnaire. In other words, the schedule sensor, the emotion questionnaire, the weather sensor, and the social questionnaire may generate opportunity data relevant to the first directive "walk to a restaurant for lunch." In some embodiments, the BEM 106 may determine that the second directive may be associated with same or different sensors and/or questionnaires as the first directive.

In some embodiments, the BEM 106 may be configured to label opportunity data associated with the first and second directives as positive or negative based on whether the opportunity data indicates a likelihood of performance or an unlikelihood of performance of the first and second directives by the user. In some embodiments, the BEM 106 may be configured to label particular opportunity data as positive or negative with respect to a particular directive. For example, opportunity data from the first weather sensor indicating it is warm or sunny outside may be labeled by the BEM 106 as positive with respect to a first directive "walk to a restaurant for lunch" and labeled by the BEM 106 as negative with respect to a second directive "go ice-skating for twenty (20) minutes." As another example, opportunity data or an answer to an emotion questionnaire indicating the user is "tired" may be labeled by the BEM 106 as positive for a first directive "touch toes," while the "tired" answer to the emotion questionnaire may be labeled by the BEM 106 as negative with respect to a second directive "run six (6) miles." For further example, an open schedule signal from the schedule sensor may be labeled by the BEM 106 as positive for both a first directive "go to the gym" and a second directive "go swimming."

In some embodiments, the BEM 106 may be configured to determine a first opportunity score, $m_{o1},$

based on the first opportunity data according to an opportunity function, examples of which are described in the present disclosure. In some embodiments, the BEM 106 may also be configured to determine the second opportunity score, $m_{o2}$, based on the second opportunity data according to the opportunity function. Various opportunity functions may be used to determine the first and the second opportunity scores based on the first opportunity data and the second opportunity data, respectively. The present disclosure merely describes examples of how the first and the second opportunity scores may be determined according to an opportunity function. For example, according to the opportunity function, the first opportunity score, $m_{o1}$, may be assigned a value, such as, for example, one (1), when a percentage of opportunity data, labeled as positive with respect to a particular first directive and the user, exceeds a threshold percentage with respect to opportunity data labeled as negative with respect to the particular first directive and the user. For example, the threshold percentage may equal fifty (50) percent, and when the positively labeled opportunity data exceeds fifty (50) percent of total opportunity data that includes the positively labeled opportunity data and the negatively labeled opportunity data, the first opportunity score, $m_{o1}$, may be assigned the value of one (1). According to the opportunity function, the first opportunity score, $m_{o1}$, may be calculated to be equal to another value, such as, for example, zero (0), when the positively labeled opportunity data does not exceed fifty (50) percent of the total opportunity data.

In some embodiments, the BEM 196 may also be configured to determine a second opportunity score, $m_{o2}$, for the second directive according to the opportunity function in a manner similar to the first opportunity score. For example, according to the opportunity function, the second opportunity score, $m_{o2}$, may be assigned a value, such as, for example, one (1), when a percentage of opportunity data, labeled as positive with respect to a particular second directive and the user, exceeds a threshold percentage with respect to opportunity data labeled as negative with respect to the particular second directive and the user. For example, the threshold percentage may equal fifty (50) percent, and when the positively labeled opportunity data exceeds fifty (50) percent of total opportunity data that includes the positively labeled opportunity data and the negatively labeled opportunity data, the second opportunity score, $m_{o2}$, may be assigned the value of one (1). According to the opportunity function, the second opportunity score, $m_{o2}$, may be calculated to be equal to another value, such as, for example, zero (0), when the positively labeled opportunity data does not exceed fifty (50) percent of the total opportunity data. For example, according to the opportunity function, the second opportunity score, $m_{o2}$, may be calculated to be equal to a number, such as, for example, one (1), when a percentage of opportunity data, labeled as positive with respect to a particular second directive and the use, exceeds a threshold percentage with respect to opportunity data labeled as negative with respect to the particular second directive and the user. In some embodiments, an opportunity function used to determine the first opportunity score may be different from another opportunity function used to determine the second opportunity score.

In some embodiments, the BEM 106 may be configured to determine a first total score, $t_1$, for the first directive based on the first priority score, $m_{p1}$, and the first opportunity score, $m_{o1}$. Similarly, in some embodiments, the BEM 106 may be configured to determine a second total score, $t_2$, for the second directive using a directive function based on the second priority score, $m_{p2}$, and the second opportunity score, $m_{o2}$. In some embodiments, the BEM 106 may be configured to calculate the first total score and the second total score according to a directive function. For example, the BEM 106 may be configured to calculate the first total score, $t_1$, according to the following example expression in some embodiments:

$$ t_1 = a_1 \times m_{p1} + b_1 \times m_{o1} $$

$$ a_1 + b_1 = 1. $$

Similarly, the BEM may be configured to calculate the second total score, $t_2$, according to the following example expression in some embodiments:

$$ t_2 = a_2 \times m_{p2} + b_2 \times m_{o2} $$

$$ a_2 + b_2 = 1. $$

In the above expressions, $a_1$ and $a_2$ represent weights assigned to priority scores $m_{p1}$ and $m_{p2}$, respectively. In the above expressions, $b_1$ and $b_2$ represent weights assigned to opportunity scores $m_{o1}$ and $m_{o2}$, respectively. In some embodiments, $a_1$ and $a_2$ may represent a probability of a user performing the first directive and the second directive, respectively, based on priority for performance. In some embodiments, $b_1$ and $b_2$ may represent the probability of the user performing the first directive and the second directive, respectively, based on opportunity for performance. For example, if the user is more likely to perform the first directive based on the user's priority for performance of the first directive as opposed to the user's opportunity for performance of the first directive, then $a_1$ maybe greater than $b_1$. Similarly, if the user is more likely to perform the second directive based on the user's priority for performance of the second directive as opposed to the user's opportunity for performance of the second directive, then $a_2$ may be greater than $b_2$. In some embodiments, $a_1$ and $a_2$ may be equal

and may represent a probability of a user performing any given directive or all of directives in the set of directives 116 based on priority for performance. In some embodiments, $b_1$ and $b_2$ may be equal and may represent a probability of a user performing any given or all of directives in the set of directives 116 based on opportunity for performance.

In some embodiments, the BEM 106 may be configured to determine a directive function to calculate the first total score and/or the second total score. The directive function may be suited to a particular user using regression. In some embodiments, in response to determining that the user is more likely to perform the first directive as opposed to the second directive and presenting the first directive to the user and not the second directive, the BEM 106 may assign a greater binary value or a probability value to the first directive than the second directive. For example, in response to determining that the user is more likely to perform the first directive as opposed to the second directive and presenting only the first directive to the user, the BEM 106 may assign a binary value or probability value of one (1) to the first directive in response to the user performing the first directive. The BEM 106 may assign a binary value or probability value of zero (0) to the second directive. In some embodiments, the BEM 106 may be configured to use the binary values, $m_{p1}$, $m_{o1}$, $m_{p2}$, and $m_{o2}$ in a regression analysis to determine $a_1$, $b_1$, $a_2$, and $b_2$

In some embodiments, a particular directive function used to calculate the first total score may be different from another directive function used to calculate the second total score. Specifically, in some embodiments, $a_1$ and $b_1$ in the directive function used to calculate the first total score may be different from $a_2$ and $b_2$ in the directive function used to calculate the second total score.

In some embodiments, the BEM 106 may be configured to determine that the user is more likely to perform the first directive as opposed to the second directive based on a comparison of the first total score and the second total score. For example, the first total score, $t_1$, may be higher than the second total score, $t_2$, which may indicate the user is more likely to perform the first directive as opposed to the second directive. In some embodiments, the BEM 106 may be configured to present the first directive to the user in response to determining that the user is more likely to perform the first directive as opposed to the second directive. In these or other embodiments, the BEM 106 may be configured to present both the first and the second directives to the user when both the first total score, $t_1$, and the second total score, $t_2$, meet a threshold value.

In some embodiments, the BEM 106 may be configured to update or adjust the first opportunity score, $m_{o1}$, according to a set schedule, such as, for example, every hour, every day, upon presentation or completion of the first directive or another directive in the set of directives 116, or upon request by the user. In some embodiments, the BEM 106 may be configured to update or adjust the first opportunity score based on opportunity data from updated sensor data related to the first directive or another directive in the set of directives 116 and/or based on opportunity data from questionnaires associated with the first directive or another directive in the set of directives 116. In some embodiments, the BEM 106 may determine which particular directive of the set of directives 116 to present to the user based at least in part on the updated first opportunity score. In some embodiments, the BEM 106 may be configured to similarly update the second opportunity score, $m_{o2}$.

In some embodiments, the BEM 106 may be configured to update or adjust the first priority score, $m_{p1}$, according to a set schedule, such as, for example, every hour, every day, upon presentation or completion of the first directive or another directive in the set of directives 116, or upon request by the user. In some embodiments, the BEM 106 may be configured to update the first priority score by re-presenting the set of directives 116 to the user for ranking and receiving updated rankings from the user. In some embodiments, the BEM 106 may determine which particular directive of the set of directives 116 to present to the user based at least in part on the updated first priority score. In some embodiments, the BEM 106 may be configured to similarly update the second priority score, $m_{p2}$.

In some embodiments, the BEM 106 may be configured to update the first priority score, $m_{p1}$, and/or the first opportunity score, $m_{o1}$, for the first directive based on a user habit. Similarly, in some embodiments, the BEM 106 may be configured to update the second priority score, $m_{p2}$, and/or the second opportunity score, $m_{o2}$, for the second directive based on the user habit or a different user habit.

For example, the goal 104 may relate to walking a certain number of steps per day. The directives in the set of directives 116 associated with walking the certain number of steps per day and selected by the user may include a first directive "walk the dog" and a second directive "walk to work." The user may rank the first and second directives with respect to one another to generate the priority rankings 120, and the BEM 106 may generate the first and second priority scores based on the priority rankings 120. The BEM 106 may receive particular opportunity data indicating that the user has a habit of walking the user's dog at a certain time in the morning. Based on the user habit, the BEM 106 may be configured to update the first and/or the second priorities scores. For example, the BEM 106 may increase the first priority score when the first directive coincides with, is associated with, or is similar to the user habit. For example, based on the user habit, the BEM 106 may increase the first priority score for the first directive "walk the dog" since it is associated with the user habit. In some embodiments, the BEM 106 may similarly increase the second priority score when the second directive is associated with the user habit. In some embodiments, the BEM 106 may decrease the first priority score when the first directive is not associated with the user habit. In some embodiments, the BEM 106 may similarly decrease the second priority score when the second directive is not associated with the user habit.

In some embodiments, the BEM 106 may be configured to update or adjust the first opportunity score, $m_{o1}$, when a time of presentation of the first directive to the user coincides with a time of performance of the user habit. Similarly, the BEM 106 may be configured to update or adjust the second opportunity score, $m_{o2}$, when a time of presentation of the first directive to the user coincides with a time of performance of the user habit.

In some embodiments, the BEM 106 may determine a time of presentation of a particular directive of the set of directives 116 to the user according to a set schedule, such as, for example, every hour, every day, or upon completion of another directive. Also, in some embodiments, the BEM 106 may determine a time of presentation of the set of directives 116 to the user according to a set schedule, such as, for example, every hour, every day, or upon completion of a directive in the set of directives 116. In some embodiments, the BEM 106 may determine the time of presentation of the particular directive and/or the set of directives 116 when requested by the user. In some embodiments, the BEM 106 may send one or more questionnaires at or near the time of presentation of the particular directive and/or the set of directives 116 to the user.

In some embodiments, in response to the BEM 106 presenting the possible directives 119 to the user, the user may select a single directive instead of the set of directives 116. In some embodiments, the BEM 106 may generate a priority ranking 120 and a priority score for the single directive. In some embodiments, the BEM 106 may be configured to determine a total score for the single directive based on the priority score and an opportunity score for the single directive. In some embodiments, the BEM 106 may determine whether or not to present the single directive to the user based on a total score for the directive meeting or exceeding a threshold value.

Therefore, in some embodiments, the system 100 may be configured to determine and present to the user the directive 122 associated with the goal 104 based on the user's priority for performing the directive 122, as well as the user's opportunity or ability to perform the directive. Thus, the user may be more likely to perform the directive 122.

Modifications, additions, or omissions may be made to Figure 1 without departing from the scope of the present disclosure. For example, in some embodiments, the set of directives 116 may not include one or more of the following: the directives 118 input by the user, the library of directives 102, and the suggested directives 112. As another example, in some embodiments, the BEM 106 may generate the directive 122 using the opportunity data, e.g., the sensor data 124 associated with the set of directives and/or the questionnaire data 126 associated with the set of directives.

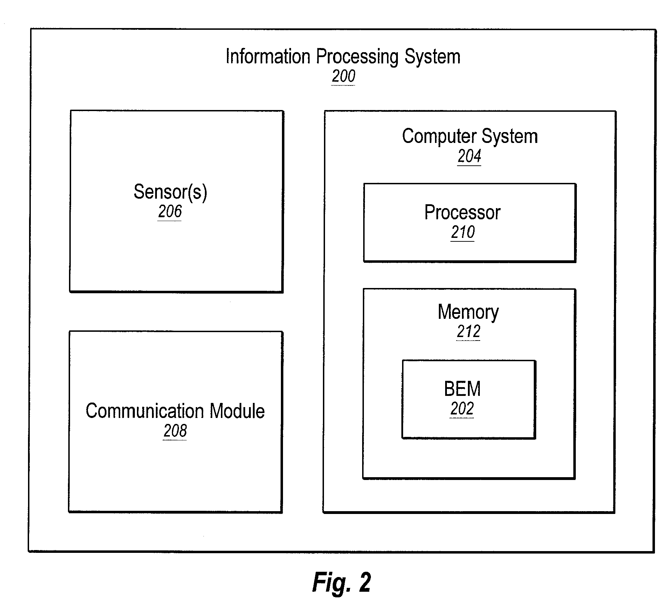

Fig. 2 illustrates an example information processing system 200 that may include a BEM 202, arranged in accordance with at least one embodiment described in the present disclosure. The BEM 202 may include or correspond to the BEM 106 of Fig. 1. The information processing system 200 may include a computing system 204, one or more sensors 206, and a communication module 208. The sensors 206 may include one or more of the following: a weather sensor, a location sensor, a schedule sensor, a heart rate sensor, a motion sensor, and a sleep sensor, such as described above.

The computing system 204 may include any suitable system, apparatus, or device configured to determine a directive for behavior encouragement using the BEM 202. The computing system 204 may include a processor 210 communicatively coupled to a memory 212. In some embodiments, the BEM 202 may be embodied in logic or instructions resident in the memory 212 for execution by the processor 210. Additionally or alternatively, one or more modules of one or more of the sensors 206 may be embodied in logic or instructions resident in the memory 212 for execution by the processor 210.

The processor 210 may include any suitable special-purpose or general-purpose computer, computing entity, or processing device including various computer hardware or software modules and may be configured to execute instructions stored on any applicable computer-readable storage media. For example, the processor 210 may include a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data, including opportunity data. Although illustrated as a single processor in Fig. 2, it is understood that the processor 210 may include any number of processors configured to perform individually or collectively any number of operations described herein. Additionally, one or more of the processors may be present on one or more different electronic devices. In some embodiments, the processor 210 may interpret and/or execute program instructions and/or process data, including opportunity data, stored in the memory 212.

The memory 212 may include computer-readable storage media for carrying or having computer-executable instructions or data structures stored thereon. Such computer-readable storage media may be any available media that may be accessed by a general-purpose or special-purpose computer, such as the processor 210. By way of example, and not limitation, such computer-readable storage media may include tangible or non-transitory computer-readable storage media including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices), or any other storage medium which may be used to carry or store desired program code in the form of computer-executable instructions or data structures and which maybe accessed by a general-purpose or special-purpose computer. Combinations of the above may also be included within the scope of computer-readable storage media. Computer-executable instructions may include, for example, instructions and data configured to cause the processor 210 to perform a certain function or group of functions.

The BEM 202 may include instructions and data configured to cause the processor 210 to determine one or more directives for behavior encouragement. Accordingly, in some embodiments, the computing system 204 may incorporate the BEM 202 in the memory 212 as illustrated in Fig. 2.

The communication module 208 may include software including routines for handling communications between the BEM 202 and other components of the information processing system 200. Additionally or alternatively, the communication module 208 may be configured to send and receive data, including opportunity data, to and from one or more other entities via a network. In some embodiments, the communication module 208 may receive opportunity data from the sensors 206 and/or questionnaires answered by the user and store the opportunity data in the memory 212. In these or other embodiments, the communication module 208 may be configured to retrieve data, including opportunity data, from the memory 212 and to send the data to the BEM 202.

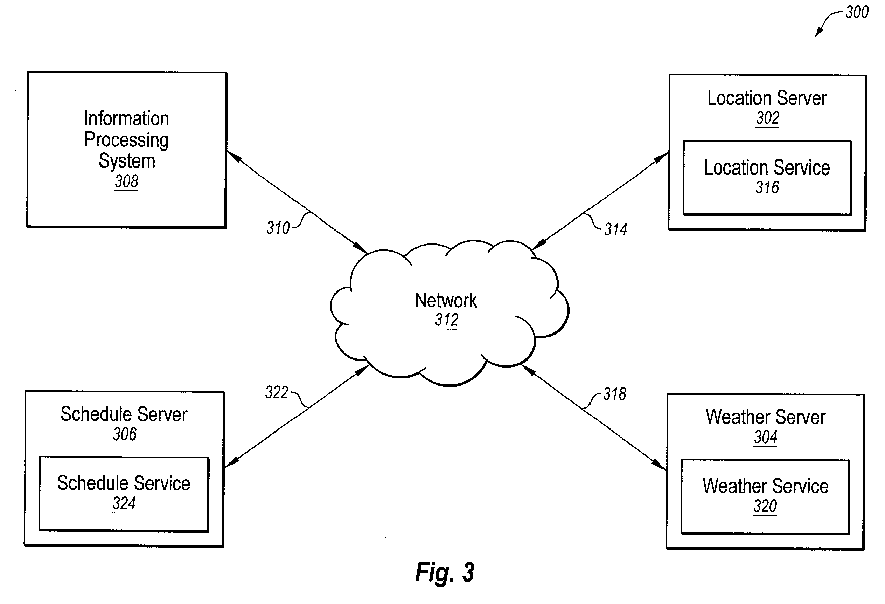

Fig. 3 is a diagram representing an example environment 300 related to determining one or more directives to present to a user, arranged in accordance with at least one embodiment described in the present disclosure. In some embodiments, the environment 300 may include a location server 302, a weather server 304, a schedule server 306, and an information processing system 308. In some embodiments, the information processing system 308 may include or correspond to the information processing system 200 of Fig. 2. In some embodiments, the information processing system 308 may be communicatively coupled to the network 312. The environment 300 may include other servers or devices not shown in Fig. 3.

In some embodiments, the network 312 may include a wired or wireless network, and may have any suitable configuration, such as a star configuration, a token ring configuration, or other configurations. Furthermore, in some embodiments, the network 312 may include an Ethernet network, a local area network (LAN), a wide area network (WAN) (e.g., the Internet), and/or other interconnected data paths across which multiple devices may communicate. In some embodiments, the network 312 may include a peer-to-peer network. In some embodiments, the network 312 may also be communicatively coupled to or include portions of a telecommunications network that may enable communication of data in a variety of different communication protocols.

In some embodiments, the network 312 may include BLUETOOTH® communication networks and/or cellular communications networks for sending and receiving data including via short messaging service (SMS), multimedia messaging service (MMS), hypertext transfer protocol (HTTP), direct data connection, wireless application protocol (WAP), e-mail, etc. The network 312 may enable communication via a standard-based protocol such as smart energy profile (SEP), Echonet Lite, OpenADR, or another suitable protocol (e.g., wireless fidelity (Wi-Fi), ZigBee, HomePlug Green, etc.).

The location server 302 may include a hardware device that includes a processor, a memory, and network communication capabilities. In some embodiments, the location server 302 may be communicatively coupled to the network 312. The location server 302 may send and receive opportunity data to and from the information processing system 308 via the network 312. For example, the location server 302 may detect a location of the user and send the location and/or other location data to the information processing system 308 via the network 312. The location server 302 may include a location service 316. The location service 316 may be configured to track, record, and/or communicate location data, such as, for example, the user's location, speed, or distance from other objects and locations, such as, for example, restaurants, etc. In some embodiments, the location service 316 may include or correspond to a location sensor, and the location data may be opportunity data.

The weather server 304 may include a hardware device that includes a processor, a memory, and network communication capabilities. In some embodiments, the weather server 304 may be communicatively coupled to the network 312. The weather server 304 may send and receive opportunity data to and from the information processing system 308 via the network 312. For example, the weather server 304 may send weather data to the information processing system 308 via the network 312.

The weather server 304 may include a weather service 320. The weather service 320 may be configured to track, record, and/or communicate the weather data corresponding to one or more locations, such as, for example, the user's location. The weather data may include information regarding temperature, amount of precipitation, humidity, presence of fog, presence of snow, presence of rain, presence of sleet, presence of hail, wind conditions, sunrise, sunset, etc. In some embodiments, the weather service 320 may include or correspond to a weather sensor, and the weather data may be opportunity data.

The schedule server 306 may include a hardware server that includes a processor, a memory, and network communication capabilities. In some embodiments, the schedule server 306 may be communicatively coupled to the network 312. The schedule server 306 may send and receive opportunity data to and from the information processing system 308 via the network 312. For example, the schedule server 306 may send schedule data to the information processing system 308 via the network 312.

The schedule server 306 may include a schedule service 324. The schedule service 324 may be configured to extract opportunity data, for example, schedule data, from the user's Outlook Calendar, Google Calendar, or other electronic calendar. The schedule data may include, for example, the user's scheduled appointments, meetings, or activities. In some embodiments, the schedule server 306 and/or schedule service 324 may include or correspond to a schedule sensor.

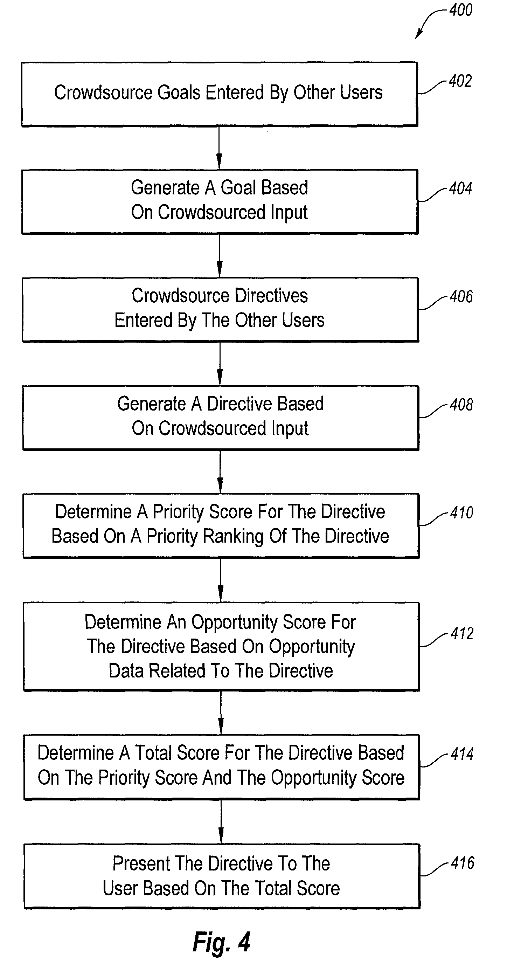

Fig. 4 is a flowchart of an example method 400 of determining a directive for behavior encouragement, arranged in accordance with at least one embodiment described in the present disclosure. The method may be performed by any suitable system, apparatus, or device. The method 400 may be implemented, in some embodiments, by a system, such as one or more of the systems Figs. 1A-1D or an information processing system 200 of Fig. 2. For example, the BEM 106 of Fig. 1A-1D or the BEM 202 of Fig. 2 may be configured to perform one or more operations associated with the method 400. Although illustrated as discrete blocks, various blocks may be divided into additional blocks, combined into fewer blocks, or eliminated, depending on the desired implementation.

In some embodiments, the method 400 may include a block 402 at which one or more goals entered by other users may be crowdsourced. In some embodiments, crowdsourcing the goals entered by other users may include polling the other users to determine which of the goals entered by the other users are popular among the other users. For example, the other users may vote on the goals entered by the other users.

At block 404, a goal may be generated based on crowdsourced input. In some embodiments, the goal may be generated by selecting it from the crowdsourced input based on its popularity with the other users and then may be presented to the user. In some embodiments, the goal may correspond to one of the possible goals referred to with respect to Fig. 1 and may be included in a library of possible goals. In some embodiments, the library of possible goals may be presented to the user.

At block 406, one or more directives entered by the other users may be crowdsourced. In some embodiments, crowdsourcing the directives entered by the other users may include polling the other users to determine which of the directives entered by the other users are popular among the other users.

At block 408, a directive may be generated based on crowdsourced input. In some embodiments, the directive may be generated by selecting it from the crowdsourced input based on its popularity with the other users. In some embodiments, the directive may be included in a library of directives and may be presented to the user in a set of directives. The library of directives may include or correspond to the library of directives 102 of Fig. 1 and the set of directives may correspond to the set of directives 116 of Fig. 1.

At block 410, a priority score for the directive may be determined based on a priority ranking of the directive. The directive may be associated with the goal. At block 412, an opportunity score for the directive may be determined based on opportunity data related to the directive. At block 414, a total score for the directive may be determined based on the priority score and the opportunity score. At block 416, the directive may be presented to the user based on the total score.

One skilled in the art will appreciate that, for this and other processes and methods disclosed herein, the functions performed in the processes and methods may be implemented in differing order. Furthermore, the outlined acts and operations are only provided as examples, and some of the acts and operations may be optional, combined into fewer acts and operations, or expanded into additional acts and operations without detracting from the essence of the disclosed embodiments.

For example, blocks 402 and 404 may be omitted from the method 400. Additionally or alternatively, blocks 406 and 408 may be omitted from the method 400. The directive and/or the goal may be generated through methods other than crowdsourcing, as described in the present disclosure. For example, the directive and/or the goal may be manually input by the user. As another example, the directive may be a suggested directive and generated based on a user habit.

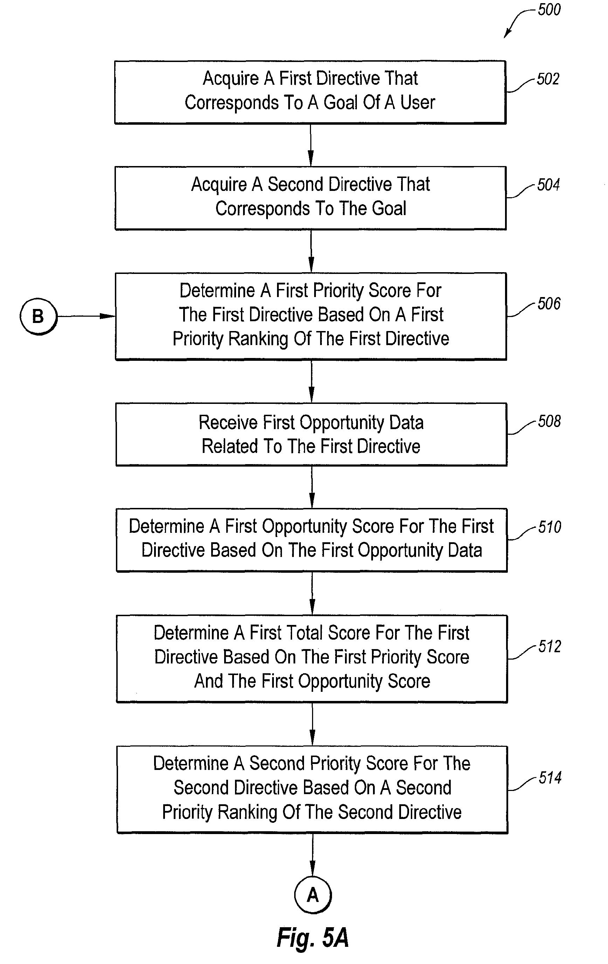

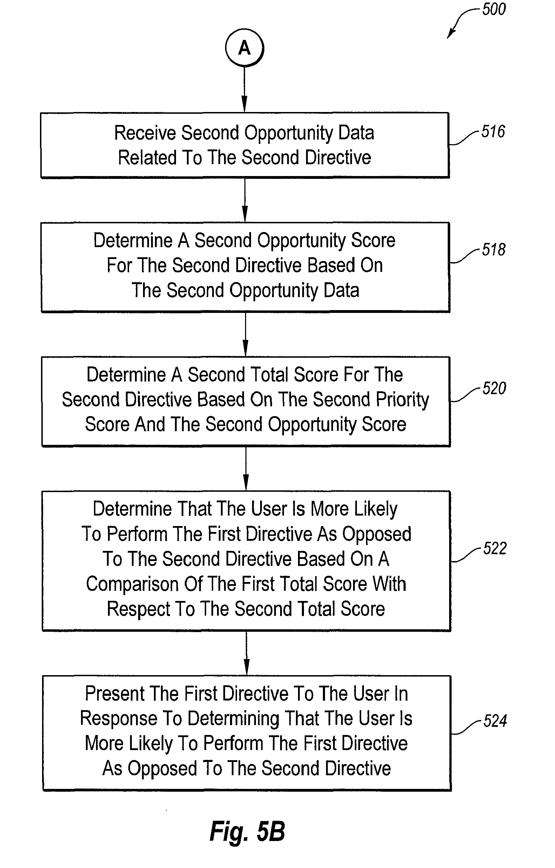

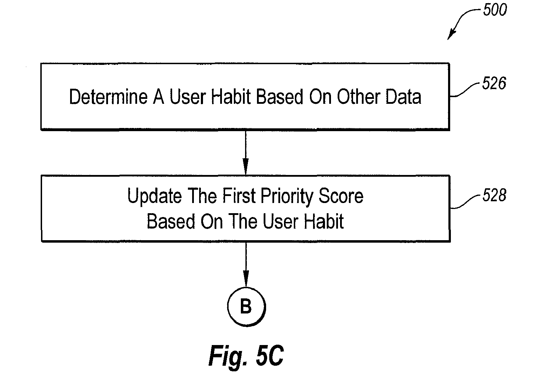

Figs. 5A-5C is a flowchart of another example method 500 of determining a directive for behavior encouragement, arranged in accordance with at least one embodiment described in the present disclosure. The method may be performed by any suitable system, apparatus, or device. The method 500 may be implemented, in some embodiments, by a system, such as a system of Figs. 1A-1D or an information processing system 200 of Fig. 2. For example, the BEM 106 of Figs. 1A-1D or the BEM 202 of Fig. 2 may be configured to perform one or more operations associated with the method 500. Although illustrated as discrete blocks, various blocks may be divided into additional blocks, combined into fewer blocks, or eliminated, depending on the desired implementation.

At block 502, a first directive that corresponds to a goal of a user may be acquired. In some embodiments, the goal may be manually input by the user. In some embodiments, the goal may be selected by the user. In some embodiments, the first directive may be manually input by the user. In some embodiments, the user may select the first directive from a library of directives associated with the goal in response to the library of directives being presented to the user.

At block 504, a second directive that corresponds to the goal may be acquired. In some embodiments, the second directive may be manually input by the user. In some embodiments, the user may select the second directive from the library of directives associated with the goal in response to the library of directives being presented to the user.

At block 506, a first priority score for the first directive may be determined based on a first priority ranking of the first directive. Additionally, at block 508, first opportunity data related the first directive may be received. In some embodiments, receiving first opportunity data related to the first directive may include receiving first opportunity data from one or more of the following: a sensor associated with the first directive and a questionnaire associated with the first directive.

Moreover, at block 510, a first opportunity score for the first directive may be determined based on the first opportunity data. In addition, at block 512, a first total score for the first directive may be determined based on the first priority score and the first opportunity score. Further, at block 514, a second priority score for the second directive may be determined based on a second priority ranking of the second directive.

At block 516, second opportunity data related the second directive may be received. In some embodiments, receiving second opportunity data related the second directive may include receiving second opportunity data from one or more of the following: a sensor associated with the second directive and a questionnaire associated with the second directive.

At block 518, a second opportunity score for the second directive may be determined based on the second opportunity data. Additionally, at block 520, a second total score for the second directive may be determined based on the second priority score and the second opportunity score. Moreover, at block 522, it may be determined that the user is more likely to perform the first directive as opposed to the second directive based on a comparison of the first total score and to the second total score.

In addition, at block 524, the first directive may be presented to the user in response to determining that the user is more likely to perform the first directive as opposed to the second directive. At block 526, a user habit may be determined based on other data. At block 528, the first priority score may be updated based on the user habit. In some embodiments, the method 500 may then proceed to block 506 and the method may continue.

One skilled in the art will appreciate that, for this and other processes and methods disclosed herein, the functions performed in the processes and methods may be implemented in differing order. Furthermore, the outlined acts and operations are only provided as examples, and some of the acts and operations may be optional, combined into fewer acts and operations, or expanded into additional acts and operations without detracting from the essence of the disclosed embodiments. For example, blocks 526 and 528 may be omitted from the method 500.

As indicated above, the embodiments described in the present disclosure may include the use of a special purpose or general purpose computer including various computer hardware or software modules, as discussed in greater detail below. Further, as indicated above, embodiments described in the present disclosure may be implemented using computer-readable media for carrying or having computer-executable instructions or data structures stored thereon.

As used in the present disclosure, the terms "module" or "component" may refer to specific hardware implementations configured to perform the actions of the module or component and/or software objects or software routines that may be stored on and/or executed by general purpose hardware (e.g., computer-readable media, processing devices, etc.) of the computing system. In some embodiments, the different components, modules, engines, and services described in the present disclosure may be implemented as objects or processes that execute on the computing system (e.g., as separate threads). While some of the system and methods described in the present disclosure are generally described as being implemented in software (stored on and/or executed by general purpose hardware), specific hardware implementations or a combination of software and specific hardware implementations are also possible and contemplated. In this description, a "computing entity" may be any computing system as previously defined in the present disclosure, or any module or combination of modulates running on a computing system.

Terms used in the present disclosure and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B."

All examples and conditional language recited in the present disclosure are intended for pedagogical objects to aid the reader in understanding the invention and the concepts contributed by the inventor to furthering the art, and are to be construed as being without limitation to such specifically recited examples and conditions. Although embodiments of the present disclosure have been described in detail, various changes, substitutions, and alterations could be made hereto without departing from the spirit and scope of the present disclosure.

**Claims**

1. A method comprising:

   acquiring a first directive that corresponds to a goal of a user;
   acquiring a second directive that corresponds to the goal;
   determining a first priority score for the first directive based on a first priority ranking of the first directive;
   receiving first opportunity data related to opportunity of performance of the first directive;
   determining a first opportunity score for the first directive based on the first opportunity data;
   determining a first total score for the first directive based on the first priority score and the first opportunity score;
   determining a second priority score for the second directive based on a second priority ranking of the second directive;
   receiving second opportunity data related to opportunity of performance of the second directive;
   determining a second opportunity score for the second directive based on the second opportunity data;

   determining a second total score for the second directive based on the second priority score and the second opportunity score;
   determining that the user is more likely to perform the first directive as opposed to the second directive based on a comparison of the first total score and the second total score; and
   presenting the first directive to the user in response to determining that the user is more likely to perform the first directive as opposed to the second directive.

2. The method of claim 1, wherein:

   the first opportunity data includes positively labeled opportunity data and negatively labeled opportunity data;
   the positively labeled opportunity data indicates a likelihood of performance of the first directive;
   the negatively labeled opportunity data indicates an unlikelihood of performance of the first directive, and
   determining the first opportunity score for the first directive based on the first opportunity data comprises:

      in response to a percentage of the positively labeled opportunity data exceeding a threshold percentage with respect to the negatively labeled opportunity data, assigning the first opportunity score a first value; or
      in response to the percentage of the positively labeled opportunity data not exceeding the threshold percentage with respect to the negatively labeled opportunity data, assigning the first opportunity score a second value.

3. Computer-readable storage media including computer-executable instructions configured to cause a system to perform operations, the operations comprising:

   acquiring a first directive that corresponds to a goal of a user;
   determining a first priority score for the first directive based on a first priority ranking of the first directive;
   receiving first opportunity data related to opportunity of performance of the first directive;
   determining a first opportunity score for the first directive based on the first opportunity data;
   determining a first total score for the first directive based on the first priority score and the first opportunity score;
   determining that the user is more likely to perform the first directive as opposed to one or more other directives based on the first total score;

and

presenting the first directive to the user in response to determining that the user is more likely to perform the first directive as opposed to the one or more other directives.

4. The computer-readable storage media of claim 3, wherein the one or more other directives include a second directive and wherein the operations further comprise:

determining a second priority score for the second directive based on a second priority ranking of the second directive;
receiving second opportunity data related to opportunity of performance of the second directive;
determining a second opportunity score for the second directive based on the second opportunity data; and
determining a second total score for the second directive based on the second priority score and the second opportunity score.

5. The computer-readable storage media of claim 3, wherein the first opportunity data includes positively labeled opportunity data and negatively labeled opportunity data, the positively labeled opportunity data indicates a likelihood of performance of the first directive, the negatively labeled opportunity data indicates an unlikelihood of performance of the first directive,
wherein determining the first opportunity score for the first directive based on the first opportunity data comprises:

in response to a percentage of the positively labeled opportunity data exceeding a threshold percentage with respect to the negatively labeled opportunity data, assigning the first opportunity score a first value; and
in response to the percentage of the positively labeled opportunity data not exceeding the threshold percentage with respect to the negatively labeled opportunity data, assigning the first opportunity score a second value.

6. The method of claim 1 or the computer-readable storage media of claim 3, wherein the method or the operations further comprise:

generating a library of directives associated with the goal, wherein the library of directives includes the first and the second directives; and
presenting the library of directives to the user.

7. The method of claim 6 or the computer-readable storage media of claim 6, wherein generating the library of directives associated with the goal comprises:

crowdsourcing a plurality of directives entered by a plurality of other users; and
generating the first directive based on crowdsourced input.

8. The method of claim 1 or the computer-readable storage media of claim 3, wherein the method or the operations further comprise:

crowdsourcing a plurality of goals entered by a plurality of other users; and
generating the goal based on crowdsourced input.

9. The method of claim 1 or the computer-readable storage media of claim 3, wherein the second opportunity data includes positively labeled opportunity data and negatively labeled opportunity data, the positively labeled opportunity data indicates a likelihood of performance of the second directive, the negatively labeled opportunity data indicates an unlikelihood of performance of the second directive, wherein determining the second opportunity score for the second directive based on the second opportunity data comprises:

in response to a percentage of the positively labeled opportunity data exceeding a threshold percentage with respect to the negatively labeled opportunity data, assigning the second opportunity score a first value; and
in response to the percentage of the positively labeled opportunity data not exceeding the threshold percentage with respect to the negatively labeled opportunity data, assigning the second opportunity score a second value.

10. The method of claim 1 or the computer-readable storage media of claim 3, wherein receiving first opportunity data related to opportunity of performance of the first directive includes receiving first opportunity data from one or more of the following: a first sensor associated with the first directive and a first questionnaire associated with the first directive.

11. The method of claim 1 or the computer-readable storage media of claim 3, wherein the method or the operations further comprise:

determining a user habit based on the other opportunity data; and
updating the first priority score based on the user habit.

12. A method comprising:

determining a priority score for a directive based on a priority ranking of the directive, wherein the directive is associated with a goal of a user;

determining an opportunity score for the directive based on opportunity data related to opportunity of performance of the directive by the user;

determining a total score for the directive based on the priority score and the opportunity score; and

presenting the directive to the user based on the total score.

**13.** The method of claim 12, further comprising:

crowdsourcing a plurality of goals entered by a plurality of other users; and

generating the goal based on crowdsourced input.

**14.** The method of claim 12, further comprising:

crowdsourcing a plurality of directives entered by a plurality of other users; and

generating the directive based on crowdsourced input.

**Fig. 1A**

```
                                        ┌─────────────────┐
                                        │                 │
                                        │                 │
                                        │    Behavior     │
┌──────────────┐                        │  Encouragement  │                    ┌──────────────────────┐
│              │        ▱▱▱▱▱            │    Module       │       ▱▱▱▱▱        │                      │
│  User Habit  │   ═══════════▶         │     106         │  ═══════════▶      │  Suggested Directives │
│     114      │                        │                 │                    │         112          │
│              │                        │                 │                    │                      │
└──────────────┘                        │                 │                    └──────────────────────┘
                                        │                 │
                                        └─────────────────┘
```

*Fig. 1B*

115

Possible Directives
119

Directives
118

Library Of Directives
102

Suggested Directives
112

Behavior
Encouragement
Module
106

Set Of Directives
116

*Fig. 1C*

**Fig. 1D**

Information Processing System
*200*

Computer System
*204*

Processor
*210*

Memory
*212*

BEM
*202*

Sensor(s)
*206*

Communication Module
*208*

*Fig. 2*

300

Location Server
302

Location Service
316

314

Weather Server
304

Weather Service
320

318

Network
312

310

322

Information Processing System
308

Schedule Server
306

Schedule Service
324

**Fig. 3**

400

```
┌─────────────────────────────────────────┐
│  Crowdsource Goals Entered By Other Users │ ─ 402
└─────────────────────────────────────────┘
                    │
                    ▼
┌─────────────────────────────────────────┐
│           Generate A Goal Based           │ ─ 404
│          On Crowdsourced Input            │
└─────────────────────────────────────────┘
                    │
                    ▼
┌─────────────────────────────────────────┐
│           Crowdsource Directives          │ ─ 406
│         Entered By The Other Users        │
└─────────────────────────────────────────┘
                    │
                    ▼
┌─────────────────────────────────────────┐
│          Generate A Directive Based       │ ─ 408
│           On Crowdsourced Input           │
└─────────────────────────────────────────┘
                    │
                    ▼
┌─────────────────────────────────────────┐
│   Determine A Priority Score For The Directive │ ─ 410
│   Based On A Priority Ranking Of The Directive │
└─────────────────────────────────────────┘
                    │
                    ▼
┌─────────────────────────────────────────┐
│        Determine An Opportunity Score For  │ ─ 412
│          The Directive Based On Opportunity │
│             Data Related To The Directive   │
└─────────────────────────────────────────┘
                    │
                    ▼
┌─────────────────────────────────────────┐
│  Determine A Total Score For The Directive Based │ ─ 414
│  On The Priority Score And The Opportunity Score │
└─────────────────────────────────────────┘
                    │
                    ▼
┌─────────────────────────────────────────┐
│           Present The Directive To The    │ ─ 416
│          User Based On The Total Score    │
└─────────────────────────────────────────┘
```

*Fig. 4*

500

| Acquire A First Directive That Corresponds To A Goal Of A User | 502 |

| Acquire A Second Directive That Corresponds To The Goal | 504 |

B →

| Determine A First Priority Score For The First Directive Based On A First Priority Ranking Of The First Directive | 506 |

| Receive First Opportunity Data Related To The First Directive | 508 |

| Determine A First Opportunity Score For The First Directive Based On The First Opportunity Data | 510 |

| Determine A First Total Score For The First Directive Based On The First Priority Score And The First Opportunity Score | 512 |

| Determine A Second Priority Score For The Second Directive Based On A Second Priority Ranking Of The Second Directive | 514 |

A

**Fig. 5A**

```
                                        A                          ┌─ 500
                                                                   ↙

              ┌──────────────────────────────────────┐
              │   Receive Second Opportunity Data     │ ─ 516
              │    Related To The Second Directive    │
              └──────────────────────────────────────┘
                                  │
                                  ▼
              ┌──────────────────────────────────────┐
              │  Determine A Second Opportunity Score │
              │   For The Second Directive Based On   │ ─ 518
              │      The Second Opportunity Data      │
              └──────────────────────────────────────┘
                                  │
                                  ▼
              ┌──────────────────────────────────────┐
              │  Determine A Second Total Score For The│
              │ Second Directive Based On The Second Priority │ ─ 520
              │  Score And The Second Opportunity Score│
              └──────────────────────────────────────┘
                                  │
                                  ▼
              ┌──────────────────────────────────────┐
              │    Determine That The User Is More Likely │
              │  To Perform The First Directive As Opposed │
              │   To The Second Directive Based On A   │ ─ 522
              │  Comparison Of The First Total Score With │
              │      Respect To The Second Total Score │
              └──────────────────────────────────────┘
                                  │
                                  ▼
              ┌──────────────────────────────────────┐
              │   Present The First Directive To The User In │
              │ Response To Determining That The User Is │ ─ 524
              │  More Likely To Perform The First Directive │
              │     As Opposed To The Second Directive │
              └──────────────────────────────────────┘
```

**Fig. 5B**

*500*

*526*

Determine A User Habit Based On Other Data

*528*

Update The First Priority Score
Based On The User Habit

( B )

*Fig. 5C*

Europäisches
Patentamt

European
Patent Office

Office européen
des brevets

**EUROPEAN SEARCH REPORT**

Application Number

EP 16 16 4882

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/099614 A1 (HU JULIA [US] ET AL) 10 April 2014 (2014-04-10) * abstract; figures 1-3 * * paragraphs [0012] - [0064] * ----- | 1-14 | INV. G06Q10/06 |

TECHNICAL FIELDS
SEARCHED (IPC)

G06Q

The present search report has been drawn up for all claims

| Place of search | Date of completion of the search | Examiner |
|---|---|---|
| Munich | 9 June 2016 | González, Gonzalo |

EPO FORM 1503 03.82 (P04C01)

## ANNEX TO THE EUROPEAN SEARCH REPORT
## ON EUROPEAN PATENT APPLICATION NO.

EP 16 16 4882

This annex lists the patent family members relating to the patent documents cited in the above-mentioned European search report.
The members are as contained in the European Patent Office EDP file on
The European Patent Office is in no way liable for these particulars which are merely given for the purpose of information.

09-06-2016

| Patent document cited in search report | Publication date | Patent family member(s) | | Publication date |
|---|---|---|---|---|
| US 2014099614 A1 | 10-04-2014 | US | 2014099614 A1 | 10-04-2014 |
| | | WO | 2014058894 A1 | 17-04-2014 |

EPO FORM P0459